# EUROPEAN PATENT SPECIFICATION

(11) **EP 3 305 693 B1**
(45) Date of publication and mention of the grant of the patent: **23.09.2020**
(21) Application number: 16425094.6
(22) Date of filing: 06.10.2016
(51) Int. Cl.: B65G 69/30, B60P 1/43

(54) **VEHICLE-LOADING RAMP**
FAHRZEUGVERLADERAMPE
RAMPE DE CHARGEMENT DE VÉHICULE

(43) Date of publication of application: 11.04.2018
(73) Proprietor: Rolfo S.p.A., 12042 Bra (CN) (IT)
(72) Inventor: Parker, Adrian, I-12042 BRA (CN) (IT)
(74) Representative: Garavelli, Paolo

(56) References cited:
- CA-A1- 2 435 447
- JP-U- S5 113 627
- US-A1- 2006 200 919
- US-B1- 6 293 748
- US-B1- 7 179 042
- Anonymous: "Pickup Truck Ramp, Pickup Truck Accessories, Pick Up Truck Ramps", , 17 March 2003 (2003-03-17), XP055358592, Retrieved from the Internet: URL:http://www.ramps-ramps-ramps.com/pick- up-truck-loading-ramps.htm [retrieved on 2017-03-24]

## Description

The present invention refers to a low-weight vehicle-loading ramp.

Loading ramps for vehicles are known in the art: usually, they are made of a steel, iron or aluminium plate on which vehicles, which must be loaded on vehicle-carrying truck, are made pass in order to load and unload them.

Known loading ramps, however, have the problem that, due to their construction, they are heavy and therefore cumbersome to install and uninstall, when an operator has to load and download vehicles.

US 2006/0200919 A1 discloses a vehicle loading ramp according to the preamble of claim 1.

Therefore, object of the present invention is solving the above prior art problems by providing a vehicle-loading ramp which has a lower weight than known vehicle-loading ramps, is very easy to install and uninstall and provides similar, if not better, gripping and supporting functions for the vehicles that must pass over it.

The above and other objects and advantages of the invention, as will appear from the following description, are obtained with a vehicle-loading ramp as claimed in claim 1. Preferred embodiments and variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described without departing from the scope of the invention as appears from the enclosed claims.

The present invention will be better described by some preferred embodiments thereof, provided as a non-limiting example, with reference to the enclosed drawings, in which:
- Figure 1 shows a perspective view of a preferred embodiment of the vehicle-loading ramp of the present invention;
- Figure 2 shows a side view of the vehicle-loading ramp of Figure 1;
- Figure 3 shows a top view of the vehicle-loading ramp of Figure 1; and
- Figure 4 shows a side view of an operating configuration of the vehicle-loading ramp of Figure 1.

With reference to the Figures, a preferred embodiment of the low-weight vehicle-loading ramp 1 of the present invention will be described. This vehicle-loading ramp 1 is used for loading and unloading vehicles 2 onto and from vehicle-carrying trucks 4.

All parts of the vehicle-loading ramp 1 are high strength steel, but the welds are placed where they are not in tension, thus the high strength is not reduced where it is needed.

Its mass is reduced by maximising the gaps in the rolling surface that are bridged by the tyres of the vehicle 2. The gaps may be further increased with a limit driven by minimum tyre size and customer expectation.

The mass of the ramp 1 is reduced by removing side-profile metal where it is unnecessary according to beam mathematics.

Manufacturing simplicity is increased by using profiled weight-saving holes 5 rather than adding webs to the side-profiles 3 of which the ramp 1 is composed.

The design lends itself to:
i. sub assembly
ii. de-skilled design, through the use of a suitable formula
iii. common panels
iv. galvanizing

With reference to the Figures, a preferred, but not limiting embodiment of the inventive vehicle-loading ramp 1 consists of two types of assemblies:
1. ladder
2. a plurality of panels arranged in the spaces left free within the ladder.

The ladder consists of three types of parts:
1. two side profiles 3
2. two elongated end elements 7, 9, placed at respective ends of the side profiles (3) and operatively connected thereto;
3. a plurality of connecting rungs 15, connected to each of the side profiles 3 along their longitudinal extension and internally with respect to the elongated end elements 7, 9.

The panels consist of two types of parts:
1. a deck skin 11
2. end brackets 12 placed at the two ends of the deck skin 11 in contact with each respective side profile 3.

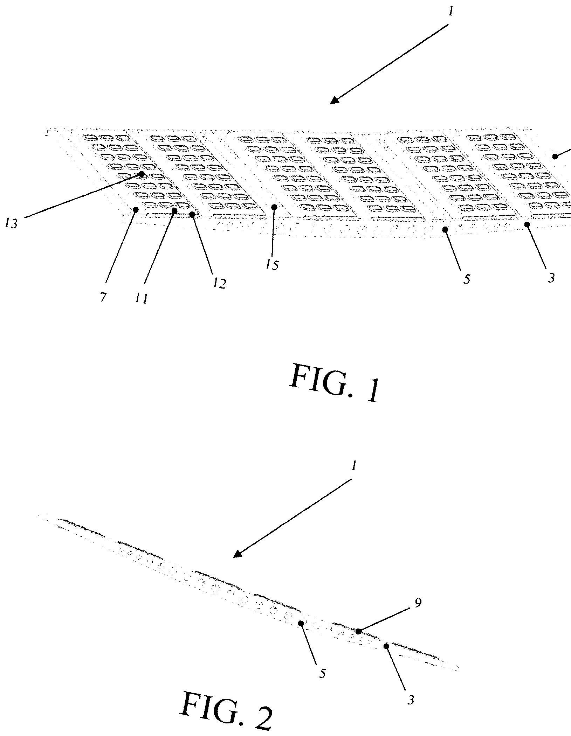

Regarding the ladder, the side profiles 3 are mathematically profiled, in order to provide a lighter weight to the ramp 1 and to match the bending requirements: therefore, as can be better shown in Figures 1 and 2, view from a side, the height of the side profiles 3 is maximum at half of their length, and progressively decreases towards the two ends thereof.

Changes to the length are controlled by a suitable bending formula.

Weight-saving holes 5 are included on the surface of the side profiles 3: these holes 5 are progressively smaller and lie on the centreline of the side profiles 3 in line with beam theory.

The complex profile and range of geometrical variation is commercially practical due to computer-driven profiling from original CAD data.

Regarding the rungs 15, they
i. reduce the turning of the side profiles along their length
ii. provide a section of surface for the tyres at no extra cost or weight (secondary function).

Regarding the panels, they:
i. are standard parts which can be re-used, without change, in a ladder of any length, of given width and with the given maximum vehicle-wheel load;
ii. are single bent deck-skins 11 with end brackets 12 added.

These brackets 12 are necessarily thicker than the deck skin 11 and have a turned edge that sits on the top surface of the side profiles 3. They:
i. support the open end of the formed deck skin 11 from within, thus the welds tend to stop the deck skin 11 and brackets 12 from separating rather than carrying all the direct forces;
ii. place the welds on the compressive side of the side profile 3 centreline, where they do not reduce the material properties of the side profiles 3;
iii. allow the turned edge to carry the weight even if not welded; thereby, the welds tend to stop the ladder and panels separating rather than carrying direct load;
iv. give a geometrical advantage to the welding between brackets 12 and deck skin 11 in that rotational distortion is in the turned edge of the brackets 12, not in the bracket 12 to deck skin 11 weld;
v. do not interfere with the position of the side-profile weight-saving holes 5.

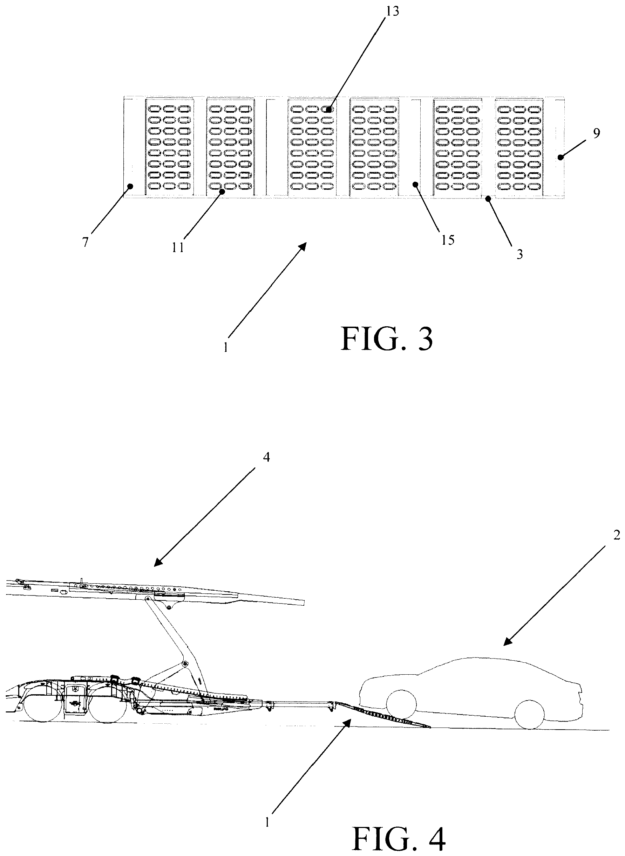

The deck skins 11 are further equipped with elongated, ellipse-shaped projections 13, which provide a stronger grip on the wheels of a vehicle 2 when it passes onto the ramp 1 upon being loaded or unloaded to or from a vehicle-carrying truck 4, as shown in Figure 4.

According to a preferred, but not limiting embodiment, and according to the size and length of the vehicles 2 to support, the ramp 1 can be composed in a sequence, as shown in the Figures and going from left to right along the length of the side profiles 3, of a first deck skin 11, a second deck skin 11, a first rung 15, a third deck skin 11, a fourth deck skin 11, a second rung 15, a fifth deck skin 11 and a sixth deck skin 11.

## Claims

1. Vehicle-loading ramp (1) consisting of two assemblies:
* a ladder,
* a plurality of panels arranged in the spaces left free within the ladder,
wherein the ladder consists of three major parts:
- two side profiles (3);
- elongated end elements (7, 9) placed at respective ends of the side profiles (3) and operatively connected thereto;
- a plurality of connecting rungs (15), connected to each of the side profiles (3) along their longitudinal extension and internally with respect to the elongated end elements (7, 9);
**characterized in that**,
each of the panels consists of two major parts:
- a deck skin (11); and
- end brackets (12) placed at the two ends of the deck skin (11) in contact with each respective side profile (3),
and **in that**, in order to provide a lighter weight and match the bending requirements, the height of the side profiles (3) is maximum at half of their length, and progressively decreases towards the two ends thereof, and **in that** said brackets (12) are thicker than their respective deck skin (11) and have a turned edge that sits on the top surface of the side profiles (3) .

2. Vehicle-loading ramp (1) according to claim 1, **characterized in that** it further comprises weight-saving holes (5) included on the surface of the side profiles (3), said holes (5) being progressively smaller and lying on the centreline of the side profiles (3).

3. Vehicle-loading ramp (1) according to any one of the previous claims, **characterized in that** said deck skins (11) are further equipped with elongated, ellipse-shaped projections (13), which provide a grip on the wheels of a vehicle (2) when it passes onto the ramp (1).

4. Vehicle-loading ramp (1) according to any one of the previous claims, **characterized in that** it is composed in a sequence, going from left to right along the length of said side profiles (3), of a first deck skin (11), a second deck skin (11), a first rung (15), a third deck skin (11), a fourth deck skin (11), a second rung (15), a fifth deck skin (11) and a sixth deck skin (11).

## Patentansprüche

1. Fahrzeugladerampe (1), die aus zwei Gruppen besteht:
* einer Treppe,
* mehrerer Paneele, die in den Freiräumen in der Treppe untergebracht sind,
wobei die Treppe aus drei Hauptbauteilen besteht:
- zwei Seitenprofilen (3);
- langen Endelementen (7, 9), die an den entsprechenden Enden der Seitenprofile (3) angeordnet sind und für den Betrieb mit diesen verbunden werden;
- mehreren Verbindungsstufen (15), die mit jedem der Seitenprofile (3) längs ihrer longitudinalen Erweiterung und intern gegenüber den langen Endelementen (7, 9) verbunden sind;
und **dadurch gekennzeichnet ist, dass**:
jedes der Paneele aus zwei Hauptbauteilen besteht:
- einer Brücke (11); und
- Endbügeln (12), die an den Brückenenden (11) in Kontakt mit jedem entsprechenden Profil (3) angebracht sind,
und dadurch, dass, um ein leichteres Gewicht zu bieten und die Biegeanforderungen zu beachten, die Höhe der Seitenprofile (3) höchstens der Hälfte ihrer Länge entspricht, und dass sie schrittweise in Richtung ihrer beiden Enden reduziert wird,
und dadurch, dass die genannten Bügel (12) stärker als ihre entsprechende Brücke (11) sind und dass sie eine gebogene Kante haben, die sich auf der Oberfläche der Seitenprofile (3) befindet.

2. Fahrzeugladerampe (1) gemäß Patentanspruch 1, die **dadurch gekennzeichnet ist, dass** sie außerdem Bohrungen (5) enthält, um Gewicht einschließlich auf der Oberfläche der Seitenprofile (3) zu sparen, die genannten Bohrungen (5) werden schrittweise kleiner und liegen auf der Mittellinie der Seitenprofile (3).

3. Fahrzeugladerampe (1) gemäß einem beliebigen der vorhergehenden Patentansprüche, die **dadurch gekennzeichnet ist, dass** die genannten Brücken (11) außerdem mit langen ellipsenförmigen Vorsprüngen (12) ausgestattet sind, die die Räder eines Fahrzeuges (2) aufnehmen, wenn es auf die Rampe (1) fährt.

4. Fahrzeugladerampe (1) gemäß einem beliebigen der vorhergehenden Patentansprüche, die **dadurch gekennzeichnet ist, dass** sie nacheinander, von links nach rechts längs der Länge der genannten Seitenprofile (3), aus einer ersten Brücke (11), einer zweiten Brücke (11), einer ersten Stufe (15), einer dritten Brücke (11), einer vierten Brücke (11), einer zweiten Stufe (15), einer fünften Brücke (11) und einer sechsten Brücke (11) besteht.

## Revendications

1. Rampe de chargement de véhicules (1) composée de deux groupes :
* une échelle,
* une pluralité de panneaux positionnés dans les espaces libres à l'intérieur de l'échelle,
où l'échelle est constituée de trois parties principales :
- deux profils latéraux (3) ;
- des éléments d'extrémité allongés (7, 9) placés aux extrémités respectives des profils latéraux (3) et reliés opérationnellement à ces extrémités ;
- une pluralité de marches de connexion (15), reliées à chacun des profils latéraux (3) le long de leur extension longitudinale et intérieurement par rapport aux éléments d'extrémité allongés (7, 9) ;
**caractérisée en ce que** :
chaque panneau est composé de deux parties principales :
- un pont (11) ; et
- des brides d'extrémité (12) placées aux deux extrémités du pont (11) au contact de chaque profil relatif (3),
et **en ce que**, dans le but d'obtenir un poids plus léger et de respecter les exigences de flexion, la hauteur des profils latéraux (3) est, au plus, la moitié de leur longueur et elle diminue progressivement vers les deux extrémités des profils,
et **en ce que** les brides (12) sont plus épaisses que leur pont relatif (11) et qu'elles ont une bordure repliée qui se situe sur la surface supérieure des profils latéraux (3).

2. Rampe de chargement de véhicules (1) selon la revendication 1, **caractérisée en ce qu'**elle comprend en outre des trous (5) de réduction du poids percés sur la surface des profils latéraux (3) ; ces trous (5) sont progressivement plus petits et se situent sur la ligne médiane des profils latéraux (3).

3. Rampe de chargement de véhicules (1) selon l'une des revendications précédentes, **caractérisée en ce que** les ponts (11) sont par ailleurs dotés de saillies allongées (13) en forme d'ellipse qui fournissent une prise sur les roues d'un véhicule (2) quand celui-ci passe sur la rampe (1).

4. Rampe de chargement de véhicules (1) selon l'une des revendications précédentes, **caractérisée en ce qu'**elle est composé dans l'ordre, de gauche à droite le long de la longueur des profils latéraux (3), d'un premier pont (11), d'un deuxième pont (11), d'une première marche (15), d'un troisième pont (11), d'un quatrième pont (11), d'une seconde marche (15), d'un cinquième pont (11) et d'un sixième pont (11).
